# DEMANDE DE BREVET EUROPEEN

(11) **EP 2 998 818 A1**
(43) Date de publication de la demande: **23.03.2016**
(21) Numéro de dépôt: 15180948.0
(22) Date de dépôt: 13.08.2015
(51) Int. Cl.: G05D 1/06, A63H 27/14

(54) **PROCÉDÉ DE CONTRÔLE DYNAMIQUE EN DÉPART LANCÉ D'UN DRONE À VOILURE TOURNANTE**

(30) Priorité: 26.08.2014 FR 1457989
(71) Demandeur: Parrot, 75010 Paris (FR)
(72) Inventeur: FOINET, Gilles, 75015 PARIS (FR); BABEL, Mathieu, 75009 PARIS (FR); BENATAR, Yoni, 92260 LES LILAS (FR)
(74) Mandataire: Dupuis-Latour, Dominique

(57) **Abrégé**

Ce procédé comprend les étapes suivantes : a) initialisation (202) d'un estimateur d'altitude à filtre prédictif ; b) lancement en l'air du drone par l'utilisateur, moteurs éteints ; c) détection d'un état de chute libre ; d) sur détection de l'état de chute libre, mise en route rapide (204) avec allumage des moteurs, activation en boucle ouverte des moyens de contrôle d'altitude et activation en boucle fermée des moyens de contrôle d'attitude ; e) après un temps de réponse des moteurs, stabilisation du drone (206) par : activation en boucle fermée des moyens de contrôle d'altitude et activation en boucle fermée des moyens de contrôle d'attitude ; f) détection d'un état de stabilisation tel que la vitesse angulaire totale du drone soit inférieure à un seuil prédéterminé ; et g) sur détection de l'état de stabilisation, passage à un état final (208) où le drone est en sustentation stable et pilotable par l'utilisateur.

## Description

L'invention concerne les drones à voilure tournante tels que les quadricoptères et analogues.

Ces drones sont pourvus de rotors multiples entrainés par des moteurs respectifs commandables de manière différenciée afin de piloter le drone en attitude et en vitesse.

Un exemple typique d'un tel drone est l'*AR*.*Drone 2.0* de Parrot SA, Paris, France, qui est un quadricoptère équipé d'une série de capteurs (accéléromètres, gyromètres trois axes, altimètre), d'une caméra frontale captant une image de la scène vers laquelle est dirigé le drone, et d'une caméra de visée verticale captant une image du terrain survolé.

L'invention concerne plus particulièrement le contrôle automatique d'un tel drone pour assurer une transition entre :
- un état initial, où les moteurs du drone sont éteints et donc où les rotors sont arrêtés, et
- un état final, où le drone est en sustentation, c'est-à-dire que ses vitesses horizontale et verticale sont nulles ou quasi-nulles, et son inclinaison également.

Le plus souvent, l'état initial est un état dans lequel le drone repose au sol, immobile. L'utilisateur déclenche alors l'allumage des moteurs à partir de sa télécommande puis fait évoluer le drone au moyen de commandes appropriées, éventuellement après que, dans une phase préalable de décollage autopiloté, le drone s'est automatiquement placé en sustentation à une hauteur prédéterminée au-dessus du sol.

L'invention concerne un procédé de contrôle dynamique du drone qui supporte une autre technique d'amorçage du vol, de type "départ lancé", où l'utilisateur tient dans sa main le drone, moteurs éteints, et lâche ou lance celui-ci dans le vide.

Il s'agit alors d'assurer un démarrage rapide des moteurs de façon à contrer l'effet de la chute libre, et de stabiliser automatiquement le drone en attitude et en altitude avant qu'il n'ait eu le temps de tomber à terre.

Le WO 2013/123944 A1 décrit ainsi un drone utilisable notamment dans des opérations de secours, à la manière par exemple d'une bouée qui serait lancée depuis un navire ou depuis la terre ferme à une personne en détresse. Le drone, initialement posé au sol moteurs arrêtés, est saisi et lancé par un sauveteur en direction de la personne en détresse. L'allumage des moteurs est automatique, et le drone se place automatiquement en vol stationnaire au-dessus de la personne en détresse pour lui larguer un équipement de sécurité. Ce document ne décrit toutefois pas la manière dont les moteurs du drone sont précisément commandés et asservis de manière à réaliser de façon sure et rapide une transition entre l'état initial, au moment où le drone est lancé par le sauveteur moteurs éteints, et l'état stable de sustentation en vol stationnaire.

Le problème de l'invention est d'assurer cette stabilisation de la manière la plus efficace et la plus rapide possible pendant la phase préalable de "départ lancé", qui durera jusqu'à ce que le drone soit suffisamment stabilisé pour pouvoir sortir du mode temporaire autopiloté et transférer le contrôle à l'utilisateur.

Cette stabilisation est d'autant plus difficile à assurer que, à la différence d'un départ avec décollage depuis le sol où le drone est immobile et l'altitude initiale (nulle) est connue, dans le cas d'un départ lancé les conditions initiales peuvent varier dans de très grandes proportions, *a priori* imprévisibles :
- simple lâcher, donc avec une vitesse initiale nulle, ou bien lancer, avec une vitesse initiale impulsionnelle plus ou moins élevée et de direction a *priori* inconnue (plutôt vers le haut, plutôt à l'horizontale...) ;
- lancement à plat ou bien lancement "en toupie" introduisant des composantes de vitesse angulaire ;
- hauteur par rapport au sol à laquelle l'utilisateur lâche ou lance le drone ;
- conditions extérieures : vent, effet de sol ou d'une paroi à proximité, etc.

Il convient également d'éviter ou de réduire à un minimum tout effet incohérent des moteurs pendant la phase de stabilisation, par exemple toute poussée exercée dans le mauvais sens, qui aurait tendance à solliciter le drone en direction du sol.

Le EP 2 644 240 A1 décrit en détail le fonctionnement d'un estimateur d'altitude à filtre de Kalman, mais ne donne aucune indication sur la manière de se servir de cet estimateur pour contrôler les moteurs du drone dans une configuration de "départ lancé" ou "départ lâché".

Dans un autre contexte, l'article de Lupashin S et al. "A Simple Learning Strategy for High-Speed Quadrocopter Multi-Flips", Proceedings of the 2010 IEEE International Conference on Robotics and Automation, May 2010, pp. 1642-1648 décrit la manière de commander un drone de type quadricoptère pour réaliser une figure de type "vrille" ou "salto" (rotation du drone d'un tour complet autour de son axe de roulis ou bien de son axe de tangage). Mais cette figure est en tout état de cause exécutée à partir d'un état initial de sustentation où les moteurs sont déjà activés - il ne s'agit donc pas de placer le drone dans un état final de sustentation, à partir d'un état initial où celui-ci est lancé d'une manière quelconque avec ses moteurs arrêtés. De plus, cet article décrit la manière d'optimiser un certain nombre de paramètres pour générer une trajectoire précise, toujours la même (la vrille ou le salto), avec des commandes de trajectoire précalculées. De fait, un tel procédé serait inadapté à la stabilisation d'un drone suite à un lancer quelconque, dont les paramètres initiaux de vitesse et d'accélération peuvent être très variables et sont en tout cas imprévisibles. Enfin, les transitions entre les différentes étapes d'exécution de la vrille ou du salto ont toujours lieu au même moment, et ne sont pas fonction du mouvement initial du drone : il n'est donc pas nécessaire, dans ce cas, de prévoir de stratégie particulière de contrôle d'un estimateur d'altitude en fonction des conditions initiales.

Le but de l'invention est, comme indiqué plus haut, de proposer un procédé permettant, dans le cas d'un départ lancé, de gérer la transition depuis un état initial, où le drone se retrouve soudainement en chute libre avec ses moteurs éteints, jusqu'à un état final où le drone est stabilisé en sustentation à une certaine hauteur au-dessus du sol, et où le contrôle peut être transféré à l'utilisateur, le tout dans un temps minimal.

Un tel procédé peut être mis en oeuvre, de manière en elle-même connue par exemple d'après le WO 2013/123944 A1 précité, avec un drone comprenant : des moyens accélérométriques, aptes à délivrer des valeurs d'accélération du drone ; des moyens gyrométriques, aptes à délivrer des valeurs de vitesse angulaire du drone ; des moyens altimétriques, aptes à délivrer une valeur d'altitude du drone ; des moyens de contrôle d'altitude comprenant une boucle asservie opérant sur la base d'une consigne d'altitude ; et des moyens de contrôle d'attitude comprenant une boucle asservie opérant sur la base d'une consigne d'attitude.

De façon caractéristique de l'invention, les moyens altimétriques comprenant un estimateur à filtre prédictif incorporant une représentation d'un modèle dynamique du drone et opérant sur la base d'un vecteur d'état contenant des variables d'altitude et de vitesse horizontale, et le procédé comprend les étapes suivantes :
a) initialisation de l'estimateur à filtre prédictif ;
b) lancement en l'air du drone par l'utilisateur depuis l'état initial, moteurs éteints ;
c) détection d'un état de chute libre tel que la norme de l'accélération du drone soit inférieure à un seuil prédéterminé pendant une durée minimale prédéterminée ;
d) sur détection dudit état de chute libre, mise en route rapide par :
   · allumage des moteurs,
      activation en boucle ouverte des moyens de contrôle d'altitude, et activation en boucle fermée des moyens de contrôle d'attitude ;
e) puis après écoulement d'une durée au moins égale à un temps de réponse des moteurs audit allumage, stabilisation du drone par :
   activation en boucle fermée des moyens de contrôle d'altitude, et
   activation en boucle fermée des moyens de contrôle d'attitude ;
f) détection d'un état de stabilisation tel que la norme de la vitesse angulaire totale (|Ω|) du drone soit inférieure à un seuil prédéterminé ; et
g) sur détection de l'état de stabilisation, passage à l'état final.

Selon diverses caractéristiques subsidiaires avantageuses :
- l'étape a) d'initialisation de l'estimateur à filtre prédictif comprend l'initialisation du vecteur d'état avec une variable d'altitude comprise entre 1 m et 2 m, une variable de vitesse verticale positive vers le haut et comprise entre 0 et 200 cm/s, et/ou un intervalle de confiance de la vitesse initiale du drone à une valeur comprise entre 100 mm/s et 2000 mm/s ;
- à l'étape d) les moyens de contrôle d'altitude activés en boucle ouverte opèrent sur la base d'une consigne d'altitude fixe correspondant à l'état initial de l'estimateur d'altitude ;
- à l'étape e) les moyens de contrôle d'altitude activés en boucle fermée opèrent sur la base d'une consigne d'altitude fixe prédéterminée ; et
- aux étapes d) et e) les moyens de contrôle d'attitude activés en boucle fermée opèrent sur la base d'une consigne d'assiette nulle et d'une consigne de cap correspondant au cap courant avec une consigne de vitesse angulaire nulle.

On va maintenant décrire un exemple de mise en oeuvre de l'invention, en référence aux dessins annexés où les mêmes références désignent d'une figure à l'autre des éléments identiques ou fonctionnellement semblables.
La Figure 1 est une vue d'ensemble montrant le drone et les principaux éléments qui le composent.
La Figure 2 illustre schématiquement la phase initiale d'un début de vol avec "départ lancé".
La Figure 3 est un schéma par blocs des différents organes de contrôle, d'asservissement et de pilotage assisté du drone.
La Figure 4 est un organigramme détaillant les différentes étapes du procédé de l'invention, pour permettre au drone de passer de l'état initial, moteurs éteints, à l'état final en vol stationnaire stabilisé.
La Figure 5 est un chronogramme illustrant les variations de la norme de l'accélération du drone, mesurée pour six lancers consécutifs.
La Figure 6 est un chronogramme illustrant, de façon plus précise, les variations de la norme de l'accélération pendant les différentes phases au cours de l'un de ces lancers.
Les Figures 7 et 8 illustrent des résultats d'essais, respectivement avec et sans initialisation spécifique de l'estimateur d'altitude, comparant les données d'altitude réelles, mesurées par un capteur du drone, avec les estimées de ces données produites pendant la phase de stabilisation du drone.

On va maintenant décrire, à titre d'exemple illustratif, un mode de mise en oeuvre de l'invention.

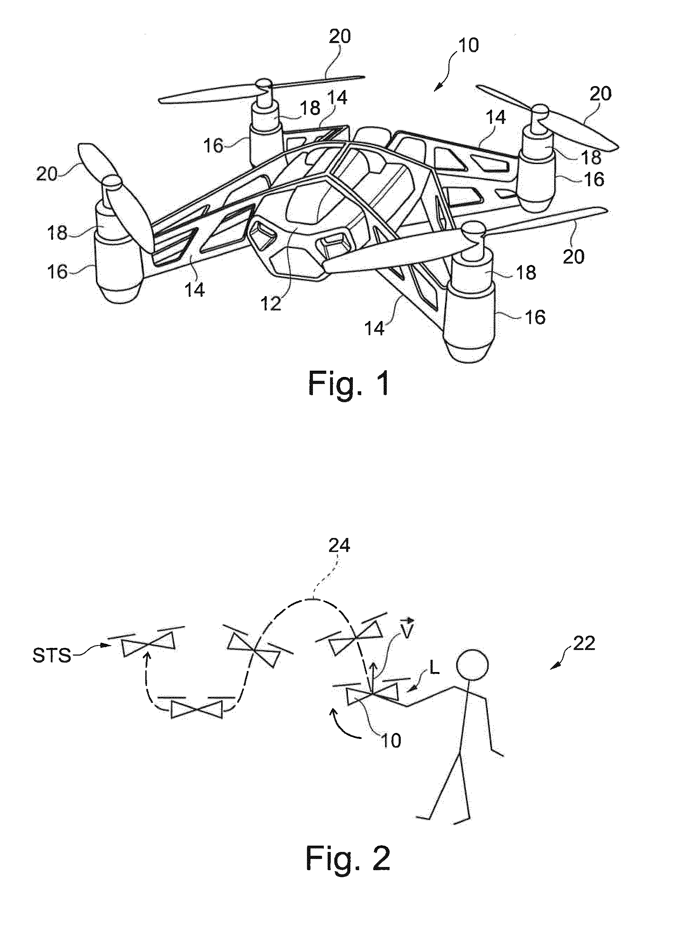

Sur la Figure 1, on a représenté un drone 10 de type quadricoptère, avec un corps central 12 à partir duquel rayonnent quatre bras support 14. Chaque bras support 14 est équipé à son extrémité distale d'un bloc propulseur 16 comprenant un moteur 18 entrainant en rotation une hélice 20 s'étendant dans un plan horizontal au-dessus du bras support.

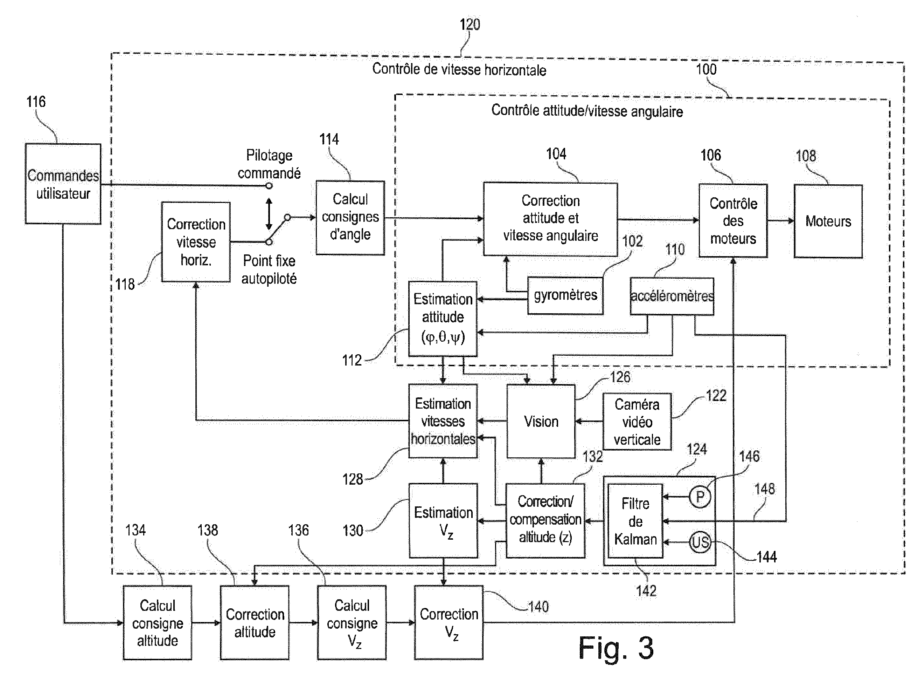

Les quatre moteurs 18 sont pilotés indépendamment par un système intégré de navigation et de contrôle d'attitude, qui sera décrit plus en détail en référence à la Figure 3.

Un tel drone peut être avantageusement piloté par l'intermédiaire d'un téléphone ou baladeur multimédia à écran tactile et accéléromètre intégré, par exemple un téléphone cellulaire de type *iPhone* ou une tablette multi-media de type *iPad* (marques déposées de Apple Inc., USA). Ces appareils incorporent les divers organes de contrôle nécessaires à la détection des commandes de pilotage et à l'échange bidirectionnel de données avec le drone via une liaison sans fil de type réseau local *Wi-Fi* (IEEE 802.11) ou *Bluetooth* (marques déposées). Ils sont en outre pourvus d'un écran tactile permettant d'afficher l'image captée par la caméra du drone avec en superposition un certain nombre de symboles pour l'activation de commandes par simple contact du doigt de l'utilisateur sur cet écran tactile.

Des capteurs inertiels (accéléromètres et gyromètres) mesurent avec une certaine précision les vitesses angulaires et les angles d'attitude du drone, c'est-à-dire les angles d'Euler (tangage ϕ, roulis θ et lacet ψ) décrivant l'inclinaison du drone par rapport à un plan horizontal d'un repère terrestre fixe, étant entendu que les deux composantes longitudinale et transversale de la vitesse horizontale sont intimement liées à l'inclinaison suivant les deux axes respectifs de tangage et de roulis.

Un télémètre à ultrasons disposé sous le drone et un capteur barométrique embarqué fournissent par ailleurs des mesures qui, combinées, donnent une estimation de l'altitude du drone par rapport au sol.

Le drone comporte également une caméra à visée verticale pointant vers le bas, apte à capter des images successives du terrain survolé et utilisée notamment pour évaluer la vitesse du drone par rapport au sol.

Le drone est pourvu d'un système automatique et autonome de stabilisation en vol stationnaire, qui est activé notamment dès que l'utilisateur retire son doigt de l'écran tactile de l'appareil, ou à la fin de la phase de décollage, ou encore en cas d'interruption de la liaison radio entre l'appareil et le drone. Le drone passe alors à un état de sustentation où il est immobilisé et stabilisé automatiquement dans cette position fixe, sans aucune intervention de l'utilisateur.

Pour une description plus précise d'un tel drone, on pourra se référer de façon générale aux WO 2010/061099 A2 et EP 2 364 757 A1, ainsi qu'au FR 2 915 569 A1 (qui décrit notamment le système de gyromètres et accéléromètres utilisé par le drone), au EP 2 431 084 A1 (qui décrit notamment la manière de contrôler des trajectoires prédéterminées), et au EP 2 644 240 A1 (qui décrit notamment le système estimateur d'altitude à partir des mesures d'un capteur barométrique et d'u capteur à ultrasons), tous au nom de Parrot SA.

En référence à la Figure 2, le but de l'invention est de permettre un "départ lancé" du drone 10, par lequel un utilisateur 22 lance ou lâche le drone qu'il tenait à la main. Le drone 10 va alors suivre une trajectoire 24, entre un état initial L au moment où l'utilisateur 22 le lance moteurs éteints, et un état final STS de sustentation stable. La trajectoire 24 est plus ou moins erratique et a *priori* imprévisible, car elle dépend grandement de la hauteur à laquelle l'utilisateur 22 lâche ou lance le drone, de la vitesse initiale V qu'il lui imprime au moment où il le lance, d'une éventuelle vitesse angulaire si le lancer est "en vrille" au lieu d'être à plat, etc.

Il s'agit de gérer cette transition entre les deux états initial et final de la manière la plus efficace, en évitant et en minimisant les phénomènes adverses (notamment une poussée des moteurs qui tendrait à rapprocher le drone du sol), et ceci en un temps minimal.

### Contrôle et asservissement des moteurs du drone

On va tout d'abord exposer la manière générale dont sont élaborées les consignes de pilotage des moteurs du drone, en référence à la Figure 3 qui est un schéma par blocs fonctionnels des différents organes de contrôle et d'asservissement du drone.

On notera que, bien que ces schémas soient présentés sous forme de circuits interconnectés, la mise en oeuvre des différentes fonctions est essentiellement logicielle, cette représentation n'étant qu'illustrative.

Le système de pilotage implique plusieurs boucles imbriquées pour le contrôle de la vitesse horizontale, de la vitesse angulaire et de l'attitude du drone, en plus des variations d'altitude.

La boucle la plus centrale, qui est la boucle 100 de contrôle d'attitude et de vitesse angulaire, utilise les signaux fournis par des gyromètres 102 et, dans un étage 104 de correction d'attitude et de vitesse angulaire, les compare à une référence constituée par des consignes de vitesse angulaire. Cet étage 104 pilote un étage 106 de contrôle des moteurs 108 afin de commander séparément le régime des différents moteurs pour corriger la vitesse angulaire du drone par l'action combinée des rotors entrainés par ces moteurs.

Les indications fournies par les gyromètres 102 et par des accéléromètres 110 sont appliquées à un étage 112 d'estimation d'attitude de type PI (Proportionnel-Intégrateur). L'étage 112 produit une estimation de l'attitude réelle du drone (angles de tangage ϕ, de roulis θ et de lacet ψ), appliquée à l'étage 104 de correction d'attitude et de vitesse angulaire. Cet étage 10 compare l'attitude ainsi estimée à des consignes d'angle, générées par un circuit 114 à partir de commandes directement appliquées par l'utilisateur 116 (configuration de "pilotage contrôlé") et/ou à partir de données générées en interne par le pilote automatique du drone via un circuit 118 de correction de vitesse horizontale servant au maintien du drone en position immobile de sustentation configuration de "point fixe" autopiloté). Les consignes éventuellement corrigées appliquées à l'étage 104 et comparées à l'attitude estimée du drone sont transmises par l'étage 104 à l'étage 106 pour commander les moteurs 108 de manière appropriée.

En résumé, à partir de l'erreur entre la consigne (appliquée par l'utilisateur et/ou générée en interne) et la mesure de l'angle (donnée par le circuit d'estimation d'attitude 112), la boucle 100 calcule une consigne en vitesse angulaire, puis calcule la différence entre cette consigne de vitesse angulaire précédente et la vitesse angulaire effectivement mesurée par les gyromètres 102. La boucle 100 détermine à partir de ces informations les différentes consignes de vitesse de rotation (et donc de force ascensionnelle), qui sont envoyées aux moteurs 108 pour réaliser la manoeuvre demandée par l'utilisateur et/ou planifiée par le pilote automatique du drone.

La boucle de contrôle de vitesse horizontale 120 utilise une caméra video verticale 122 et un circuit estimateur d'altitude 124 (décrit plus en détail ci-après). Un circuit 126 assure le traitement des images produites par la caméra verticale 122, en combinaison avec les signaux de l'accéléromètre 1110 et du circuit d'estimation d'attitude 112, pour estimer au moyen d'un circuit 128 les deux composantes de la vitesse horizontale du drone. Les vitesses horizontales estimées sont corrigées par l'estimation de vitesse verticale donnée par un circuit 130 et par une valeur de l'altitude obtenue à partir de l'estimateur 134 et d'un circuit 132 de correction/compensation des valeurs d'altitude dans certaines configurations de vol particulières du drone.

En ce qui concerne les déplacements verticaux du drone, l'utilisateur 116 applique des commandes à un circuit 134 de calcul de consignes d'altitude, consignes qui sont appliquées à un circuit 136 de calcul de consigne de vitesse ascensionnelle V_{z} via le circuit de correction d'altitude 138 recevant l'estimation d'altitude donnée par le circuit 132. La vitesse ascensionnelle V_{z} calculée est appliquée à un circuit 140 qui compare cette vitesse de consigne à la vitesse correspondante estimée par le circuit 140 et modifie en conséquence les données de commande des moteurs (étage 106) pour augmenter ou réduire la vitesse de rotation simultanément sur tous les moteurs de façon à minimiser l'écart entre vitesse ascensionnelle de consigne et vitesse ascensionnelle mesurée.

### Estimation de l'altitude du drone

On va décrire plus précisément la manière dont opèrent le circuit 124 d'estimation d'altitude et le circuit 132 de correction/compensation de la valeur d'altitude estimée.

Par "altitude", on entendra la valeur de la position instantanée du drone en direction verticale, considérée dans un repère terrestre fixe tel qu'un repère galiléen, dont l'altitude zéro correspond à la position du sol. Cette "altitude" est donc une grandeur absolue.

On décrira tout d'abord la manière dont opère le circuit d'estimation d'altitude 124.

Ce circuit met en oeuvre un estimateur d'état de type "filtre de Kalman" 142, qui est un filtre à réponse impulsionnelle infinie estimant les états d'un système dynamique (le drone dans le cas présent) à partir d'une série de mesures appliquées en entrée. On trouvera les principes généraux de cette technique par exemple dans R.E. Kalman, A new Approach to Linear Filtering and Prediction Problems, Transactions of the ASME - Journal of Basic Engineering, Vol. 82 (1960).

Dans le cas présent, le filtre de Kalman reçoit en entrée :
- le signal délivré par un capteur à ultrasons (capteur US) 144,
- le signal délivré par un capteur barométrique 146, et
- en 148, le signal délivré par les accéléromètres 110.

Le système dynamique du filtre de Kalman est constitué par un ensemble d'équations qui décrit le comportement du drone. Une telle modélisation est exposée notamment dans le EP 2 644 240 A1 précité, auquel on pourra se référer pour de plus amples détails.

Le filtre de Kalman 142 opère en deux phases, avec successivement :
- une phase de prédiction, effectuée à chaque itération du filtre : cette phase consiste à prédire l'altitude du drone à l'instant courant à l'aide d'une part du signal accélérométrique et d'autre part de la modélisation dynamique du drone ; et
- une phase de recalage, qui consiste à corriger la prédiction en utilisant les mesures courantes délivrées par les capteurs US 144 et barométrique 146. Cette étape n'est pas nécessairement réalisée à chaque itération car les mesures du capteur US ne sont pas forcément disponibles tout le temps, comme on l'expliquera plus bas.

Le filtre de Kalman utilise et estime quatre états, à savoir :
- l'altitude du drone par rapport à son point de départ (position à l'instant initial),
- la vitesse verticale Vz,
- le biais accélérométrique, et
- le biais de la mesure de pression délivrée par le capteur barométrique 146.

Le biais accélérométrique représente une erreur de mesure de l'accéléromètre z, qui varie à basse fréquence notamment avec la température. Celui-ci est recalé en vol à l'aide des mesures fournies par les deux capteurs 144 et 146, ce qui permet notamment d'être plus précis lorsque ces mesures disparaissent.

L'état de biais de la mesure de pression permet de corriger les dérives du capteur barométrique 146. Celles-ci apparaissent principalement au décollage, à la mise en route des moteurs et au cours des premières secondes de vol avec la montée en température. Ces dérives peuvent également apparaitre lorsque l'environnement de pression est modifié dans d'autres circonstances, par exemple lorsque le drone évolue à l'intérieur d'une pièce et qu'une personne ouvre une fenêtre de cette pièce, etc. Cet état de biais de la mesure de pression est estimé à partir des mesures du capteur US 154. Lorsque la mesure US n'est plus disponible, par exemple lorsque le drone ne reçoit plus d'écho, l'état de biais de la mesure de pression n'est plus estimé, il est maintenu à une valeur constante.

Pour recaler les états du filtre, celui-ci utilise trois observations :
- la mesure de distance donnée par le capteur US 144 et éventuellement corrigée d'une valeur dite *d'offset.* On notera que cette observation n'est pas disponible en permanence : dans des conditions optimales, sur un sol lisse et à basse altitude, la mesure est fournie à une fréquence de récurrence de 25 Hz, soit 1 fois sur 8 par rapport à la fréquence de recalcul des données de pilotage du drone, qui est typiquement de 200 Hz. D'autre part, la mesure peut être rejetée en cas de réception d'échos chaotiques ;
- la mesure de pression donnée par le capteur barométrique 146 et corrigée de son offset propre. Cette mesure est généralement présente à chaque itération, elle est toutefois désactivée lorsque le drone est très près du sol, typiquement à moins de 20 cm du sol, compte tenu des effets de souffle perturbateurs qui parasitent fortement la mesure de pression ; et
- la mesure d'altitude zéro, qui n'est utilisée que lorsque le drone n'est pas en vol ; il s'agit d'une mesure virtuelle qui permet de s'assurer que la valeur d'altitude délivrée aux circuits de navigation reste fixée à zéro.

### Contrôle du départ lancé

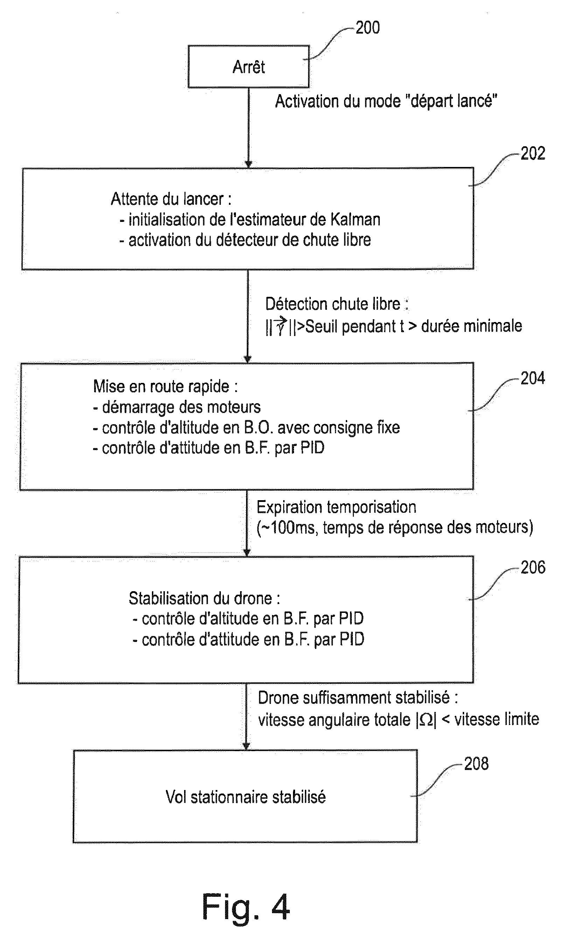

La Figure 4 est un organigramme détaillant les différentes étapes permettant au drone de passer d'un état initial, moteurs éteints (étape 200) à un état final en vol stationnaire stabilisé (étape 208).

L'utilisateur active le mode "départ lancé", par exemple au moyen d'un bouton de l'interface tactile de son appareil de télécommande.

Le drone se met alors (étape 202) en attente du lancer par l'utilisateur. Les moteurs restent éteints, pour ne pas risquer de blesser l'utilisateur. Les paramètres du filtre de Kalman 142 de l'estimateur d'altitude 124 sont alors initialisés, d'une façon spécifique propre à un départ lancé.

En effet, dans le cas d'un décollage au sol on sait que l'altitude est nulle et que la vitesse verticale est nulle ; l'initialisation de l'estimateur est alors fiable, et on peut accorder à ces états une variance initiale très faible, avec un intervalle de confiance de l'ordre de 1 mm/s pour la vitesse verticale.

En revanche, dans le cas d'un départ lancé l'altitude et la vitesse initiale ne sont pas connues. Les conditions initiales du vecteur d'état, qui contient notamment l'altitude et la vitesse verticale, sont alors modifiées de la manière suivante, en choisissant d'initialiser :
- l'altitude, approximativement la hauteur d'une épaule soit 1,50 m environ (typiquement, 1 à 2 m) et
- la vitesse verticale, à 70 cm/s, positive vers le haut (typiquement, 0 à 200 cm/s).

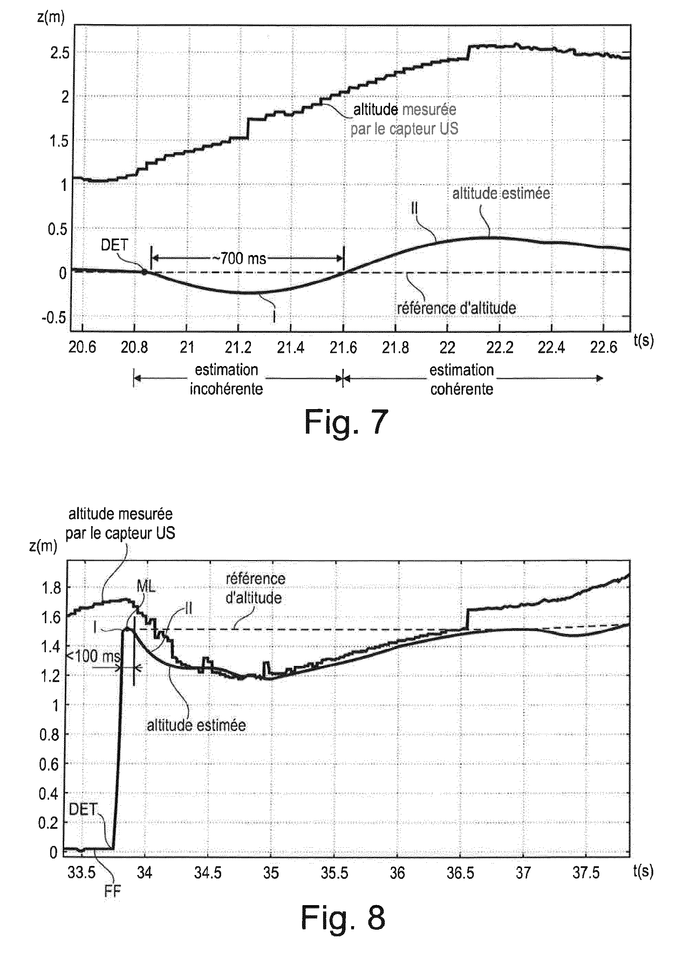

D'autre part, la composante de vitesse verticale de l'estimateur d'état va être fortement désensibilisée, du fait de la très grande incertitude sur la valeur de l'initialisation. Pour pouvoir estimer très rapidement à l'aide des capteurs la vitesse verticale, dont la valeur initiale est très incertaine, l'intervalle de confiance de la vitesse initiale est établi à une valeur de l'ordre de 1000 mm/s (typiquement, à une valeur comprise entre 100 et 2000 mm/s). Ceci permettra une convergence plus rapide de l'estimateur en accord avec les deux capteurs US 144 et barométrique 146, comme on l'illustrera plus bas en référence à l'exemple des Figures 7 et 8.

Le drone est alors prêt à être lancé, le passage à l'étape suivante (l'étape 202) étant décidé par un détecteur de chute libre, activé au cours de cette phase préalable.

La détection de chute libre a pour but de détecter le lancement du drone afin de démarrer les moteurs le plus rapidement possible, dès que l'utilisateur a lâché le drone.

Les accéléromètres 110 mesurent l'accélération du drone dans un référentiel terrestre, minorée de l'accélération du champ de pesanteur exprimée dans le référentiel local du drone : de fait, lorsque le drone est en chute libre, l'accélération de son centre de gravité est égale à la seule force qui s'applique sur le système, c'est-à-dire la pesanteur. Cela se traduit sur les signaux des accéléromètres par une accélération mesurée nulle.

Le principe de la détection consiste à déterminer la norme de la mesure de l'accélération, et à considérer qu'il y a chute libre détectée si cette norme est inférieure à un seuil donné S pendant un temps minimal donné. Ce seuil est par exemple fixé à S = 4 m/s², ce qui permet d'être robuste aux biais du capteur et à la composante non nulle d'accélération apparaissant lorsque le drone est en rotation, due au fait que le capteur n'est pas au centre d'inertie du drone.

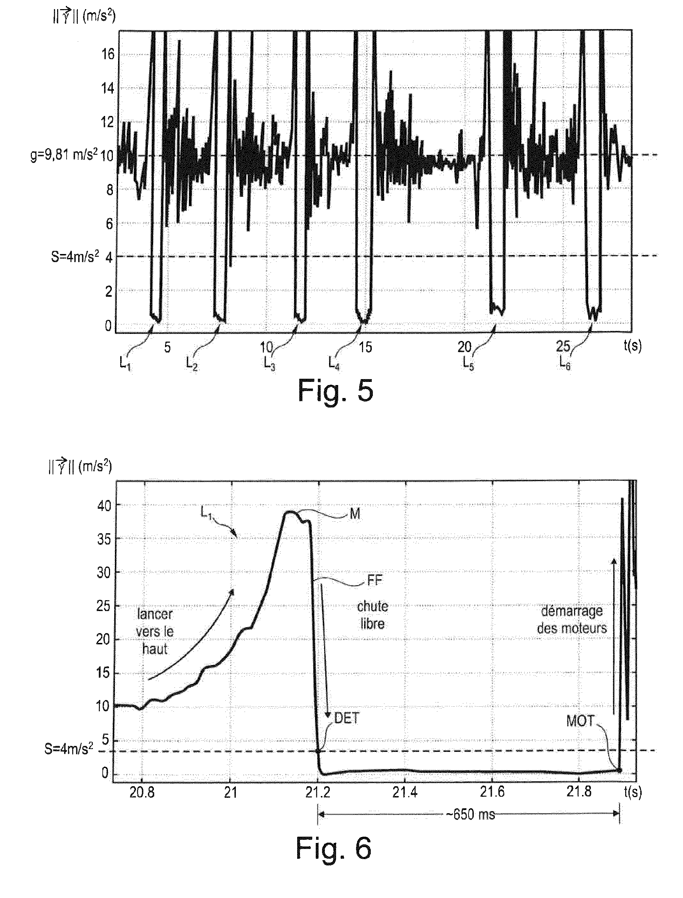

La Figure 5 est un chronogramme illustrant les variations de la norme de l'accélération mesurée pour six lancers successifs L₁ à L₆. On a également porté sur cette figure l'accélération g de la pesanteur et le seuil S de détection de la condition de chute libre.

La Figure 6 illustre, de façon plus précise, les variations de la norme de l'accélération pour l'un des lancers.

Dans une première phase, correspondant à un lancer du drone vers le haut par l'utilisateur, l'accélération augmente jusqu'à un maximum M, atteint au moment où le drone quitte la main de l'utilisateur. Il s'ensuit alors une phase de chute libre FF avec une diminution rapide de l'accélération mesurée, jusqu'au franchissement du seuil S correspondant à l'instant DET de détection de la condition de chute libre. Cette chute libre se poursuit jusqu'au démarrage des moteurs à l'instant MOT, après quelques centaines de millisecondes. L'accélération augmente à nouveau car alors le drone n'est plus soumis seulement à la force de la pesanteur mais également à la force ascensionnelle des moteurs qui le propulsent.

La détection de la chute libre déclenche non seulement le démarrage des moteurs, mais également l'activation des boucles de contrôle d'attitude et d'altitude (étape 204).

On notera que, dans la mesure où le départ se fait moteurs éteints, il est avantageux d'équiper le drone de moteurs à balais (plutôt que de moteurs *brushless,* sans balais) du fait de leur très faible temps de réponse à l'allumage, typiquement de 100 ms environ.

De façon caractéristique de l'invention, dans cette phase qui suit immédiatement le démarrage des moteurs, la commande d'altitude est une commande en boucle ouverte avec une consigne fixe, égale à la valeur feed-*forward* estimée précédemment, ce qui permet d'assurer le démarrage des quatre moteurs avec une consigne moyenne autour de laquelle pourra fonctionner la boucle de contrôle d'attitude. Le fonctionnement en boucle ouverte de la commande d'altitude permet de ne pas propager les effets du recalage de l'estimateur d'altitude vers les commandes moteur. En ce qui concerne le contrôle d'attitude, celui-ci est opéré en boucle fermée, avec une assiette nulle et un angle de cap égal au cap courant. L'asservissement est de manière en elle-même connue, un asservissement PID (Proportionnel-Intégrateur-Différentiateur) en quaternion pour les consignes d'assiette (angles contrôlés ϕ et θ), et un contrôleur D sur le cap, c'est-à-dire que la commande s'exprime : U_{ψ} = - K_{p.ψ} et que celle-ci est saturée.

Cet état de mise en route rapide est maintenu pendant la durée d'une temporisation prédéterminée, de l'ordre de grandeur du temps de réponse des moteurs, c'est-à-dire environ 100 ms.

Après cette mise en route rapide (étape 204), la phase suivante (étape 206) est une phase de stabilisation du drone où la commande d'altitude est assurée par un asservissement PID dorénavant en boucle fermée, avec une référence d'altitude fixée par exemple à 1,50 m. Le contrôle d'attitude, en revanche, n'est pas modifié et il est identique à ce qui a été décrit plus haut pour la phase de mise en route rapide de l'étape 204.

Cette étape 206 de stabilisation du drone est poursuivie le temps nécessaire pour assurer la stabilisation du drone.

On considère que le drone est suffisamment stabilisé quand sa vitesse angulaire totale |Ω| est inférieure à un seuil prédéterminé, par exemple 90°/s.

La durée de cette phase de stabilisation peut être très variable : brève si le drone est lancé à plat, beaucoup plus longue s'il est lancé en toupie. L'état final (étape 208) est celui d'un vol stationnaire suffisamment stabilisé pour que les commandes puissent être rendues à l'utilisateur, le drone sortant alors du mode de fonctionnement autopiloté sur départ lancé.

Les Figures 7 et 8 illustrent des résultats d'essais, respectivement avec et sans initialisation spécifique de l'estimateur d'altitude, permettant de comparer les données d'altitude réelles, mesurées par le capteur à ultrasons du drone (capteur US 144 sur la Figure 3), avec les estimées de ces données produites pendant la phase de stabilisation du drone.

La Figure 7 correspond au cas d'un départ lancé avec une initialisation non modifiée du filtre de Kalman, c'est-à-dire une initialisation conventionnelle pour un départ du drone posé au sol : altitude nulle, vitesse verticale nulle et très faible intervalle de confiance (de l'ordre de 1 mm/s).

On a illustré sur cette figure :
- l'altitude mesurée par le capteur US 144 (c'est-à-dire la valeur vers laquelle doit converger l'estimateur d'altitude 124) ;
- l'estimée de l'altitude telle qu'elle est produite par le filtre de Kalman 142 ; et
- une référence d'altitude constante, nulle.

Avec de tels paramètres d'initialisation, lorsque le drone est lancé à la main (par exemple à une hauteur de l'ordre de 1 m) au lieu de décoller du sol, à partir du moment de la détection de chute libre DET l'altitude augmente du fait de l'impulsion imprimée par l'utilisateur vers le haut. Il s'ensuit une première phase I où l'estimation est incohérente, c'est-à-dire que l'altitude estimée décroit et prend une valeur négative, alors qu'en réalité l'altitude augmente. Cette phase d'estimation incohérente peut se prolonger pendant plusieurs centaines de millisecondes (environ 700 ms dans l'exemple illustré) avant que l'altitude estimée ne redevienne positive et croissante (phase II d'estimation cohérente). Ainsi, la convergence de l'estimation sur la mesure nécessite plusieurs centaines de millisecondes, période pendant laquelle les moteurs seront contrôlés de façon également incohérente, c'est-à-dire qu'ils exerceront une poussée dans le mauvais sens et tendront à plaquer le drone vers le sol au lieu de l'en éloigner.

La Figure 8 est homologue de la Figure 7, mais avec une initialisation du filtre de Kalman spécialement adaptée à un départ lancé, comme expliqué en détail plus haut.

Dans cet exemple, l'altitude est initialisée à 1,50 m (au lieu de zéro) et la vitesse verticale à 70 cm/s, positive vers le haut (au lieu de zéro). La composante de vitesse verticale de l'estimateur d'état est également fortement désensibilisée, avec un intervalle de confiance très large, fixé dans cet exemple à 1000 mm/s (au lieu de 1 mm/s).

Comme on peut le voir, à partir de l'instant DET de la détection de chute libre, la valeur estimée de l'altitude atteint très rapidement un maximum local ML, pour redescendre ensuite, de sorte que la durée de la phase d'estimation incohérente I est extrêmement réduite, de l'ordre de 100 ms, correspondant au temps de réponse des moteurs. La phase II suivante est une phase d'estimation cohérente, qui permettra à l'estimateur de converger à bref délai vers l'altitude réelle, telle que mesurée par le capteur à ultrasons.

## Revendications

1. Un procédé de contrôle dynamique d'un drone (10) à voilure tournante à rotors multiples (20) entrainés par des moteurs respectifs (18) avec application de commandes moteur différenciées pour piloter le drone en attitude, en altitude et en vitesse,
ce procédé étant un procédé pour opérer une transition :
- depuis un état initial où le drone est avec ses moteurs éteints,
- jusqu'à un état final où le drone est en sustentation, et à partir duquel le drone est pilotable par un utilisateur,
le drone comprenant :
- des moyens accélérométriques (110), aptes à délivrer des valeurs d'accélération du drone ;
- des moyens gyrométriques (102), aptes à délivrer des valeurs de vitesse angulaire du drone ;
- des moyens altimétriques (124), aptes à délivrer une valeur d'altitude du drone ;
- des moyens de contrôle d'altitude (132-138) comprenant une boucle asservie opérant sur la base d'une consigne d'altitude ; et
- des moyens de contrôle d'attitude (104, 106, 112) comprenant une boucle asservie opérant sur la base d'une consigne d'attitude,
ce procédé comprenant des étapes de :
. lancement en l'air du drone depuis l'état initial, moteurs éteints ;
. allumage des moteurs et activation des moyens de contrôle d'altitude et des moyens de contrôle d'attitude ; et
. stabilisation du drone en sustentation à l'état final,
procédé ***caractérisé en ce que**,*
les moyens altimétriques comprenant un estimateur à filtre prédictif (142) incorporant une représentation d'un modèle dynamique du drone et opérant sur la base d'un vecteur d'état contenant des variables d'altitude et de vitesse horizontale,
le procédé comprend les étapes successives suivantes :
a) initialisation (202) de l'estimateur à filtre prédictif ;
b) lancement en l'air du drone par l'utilisateur depuis l'état initial (LL), moteurs éteints ;
c) détection d'un état de chute libre (FF) tel que la norme de l'accélération (|γ|) du drone soit inférieure à un seuil prédéterminé pendant une durée minimale prédéterminée ;
d) sur détection dudit état de chute libre, mise en route rapide (204) par :
· allumage des moteurs,
· activation en boucle ouverte des moyens de contrôle d'altitude, et
· activation en boucle fermée des moyens de contrôle d'attitude ;
e) puis après écoulement d'une durée au moins égale à un temps de réponse des moteurs audit allumage, stabilisation du drone (206) par :
· activation en boucle fermée des moyens de contrôle d'altitude, et
· ctivation en boucle fermée des moyens de contrôle d'attitude ;
f) détection d'un état de stabilisation tel que la norme de la vitesse angulaire totale (|Ω|) du drone soit inférieure à un seuil prédéterminé (S) ; et
g) sur détection de l'état de stabilisation, passage à l'état final (208).

2. Le procédé de la revendication 1, dans lequel l'étape a) d'initialisation de l'estimateur à filtre prédictif comprend l'initialisation du vecteur d'état avec une variable d'altitude comprise entre 1 m et 2 m.

3. Le procédé de la revendication 1, dans lequel l'étape a) d'initialisation de l'estimateur à filtre prédictif comprend l'initialisation du vecteur d'état avec une variable de vitesse verticale positive vers le haut et comprise entre 0 et 200 cm/s.

4. Le procédé de la revendication 1, dans lequel l'étape a) d'initialisation de l'estimateur à filtre prédictif comprend l'initialisation d'un intervalle de confiance de la vitesse initiale du drone à une valeur comprise entre 100 mm/s et 2000 mm/s.

5. Le procédé de la revendication 1, dans lequel à l'étape d) les moyens de contrôle d'altitude activés en boucle ouverte opèrent sur la base d'une consigne d'altitude fixe correspondant à l'état initial de l'estimateur d'altitude.

6. Le procédé de la revendication 1, dans lequel à l'étape e) les moyens de contrôle d'altitude activés en boucle fermée opèrent sur la base d'une consigne d'altitude fixe prédéterminée.

7. Le procédé de la revendication 1, dans lequel aux étapes d) et e) les moyens de contrôle d'attitude activés en boucle fermée opèrent sur la base d'une consigne d'assiette nulle et d'une consigne de cap correspondant au cap courant avec une consigne de vitesse angulaire nulle.
